# FASCICULE DE BREVET EUROPEEN

(11) **EP 4 367 026 B1**
(45) Date de publication et mention de la délivrance du brevet: **27.05.2026**
(21) Numéro de dépôt: 22751771.1
(22) Date de dépôt: 05.07.2022
(51) Int. Cl.: B64D 27/24, B60L 50/13, H02J 3/00, B64D 27/02

(54) **ARCHITECTURE DE GÉNÉRATION ÉLECTRIQUE POUR TURBOMACHINE HYBRIDÉE**
STROMERZEUGUNGARCHITEKTUR FÜR HYBRIDTURBINENMOTOR
ELECTRICAL GENERATION ARCHITECTURE FOR HYBRID TURBINE ENGINE

(30) Priorité: 06.07.2021 FR 2107296
(43) Date de publication de la demande: 15.05.2024
(73) Titulaire: Safran Electrical & Power, 31702 Blagnac (FR)
(72) Inventeur: HADJIDJ, Djemouai, 77550 Moissy-Cramayel (FR)
(74) Mandataire: Santarelli
(86) Numéro de dépôt international: PCT/FR2022/051346
(87) Numéro de publication internationale: WO 2023/281210

(56) Documents cités:
- EP-A1- 3 840 205
- EP-A1- 4 092 858
- WO-A1-2020/070438
- WO-A1-2021/099720
- US-A1- 2016 016 670
- US-A1- 2018 112 599

## Description

### DOMAINE TECHNIQUE

La présente demande se rapporte au domaine des architectures électriques pour aéronef et propose une architecture électrique améliorée permettant notamment d'alimenter en courant alternatif un réseau avion d'un aéronef à propulsion hybride thermique/électrique à partir des arbres basse pression et haute pression d'une turbomachine.

### ÉTAT DE LA TECHNIQUE ANTÉRIEURE

De plus en plus d'aéronefs fonctionnent avec des systèmes de propulsion hybride, c'est-à-dire avec un système comprenant une turbomachine, et un ou plusieurs générateurs électriques et générateurs-moteurs électriques.

Une installation propulsive hybride d'un aéronef peut comporter, pour chaque turbomoteur, plusieurs réseaux de distribution électrique: un réseau de distribution électrique propulsif, un réseau de distribution électrique non-propulsif, et éventuellement un réseau de distribution électrique de charges d'un système de régulation électrifié du turbomoteur.

Le réseau de distribution électrique propulsif est destiné à alimenter des équipements liés au système propulsif, typiquement de puissance importante. Le réseau de distribution électrique propulsif est généralement de type continu et d'un niveau élevé de tension qui dépend des puissances en jeu.

Le réseau de distribution électrique non propulsif est destiné à alimenter en électricité des équipements de puissance intermédiaire, c'est-à-dire principalement des équipements liés au système non propulsif désignés également comme des charges « avion ». Le réseau de distribution électrique non propulsif a un niveau de tension intermédiaire généralement inférieur au niveau de tension du réseau de distribution électrique propulsif. Dans certaines architectures connues, ce réseau est de type continu.

On cherche typiquement à réaliser une architecture électrique d'aéronef interconnectant les sources d'énergie disponibles dans les turbomachines et le corps de l'aéronef et permettant de fournir ou de prélever une puissance contrôlée avec une ou plusieurs machines électriques, d'assurer la compatibilité de l'ensemble de ces fonctions liées à la propulsion avec les fonctions de fournitures d'autre besoins énergétiques, et d'assurer une gestion optimisée de l'ensemble de ces prélèvements et fournitures d'énergies avec différentes sources d'énergies et moyens de stockage d'énergie.

Des architectures électriques d'aéronef permettant de fournir ou de prélever une puissance contrôlée avec une ou plusieurs machines électriques respectivement sur les arbres haute pression et basse pression sont apparues. Le document WO2020174165 (A1) émanant de la demanderesse présente par exemple un tel type d'architecture. US2016/016670 (A1), WO2021/099720 (A1) et WO2020/070438 (A1) divulguent aussi ce type d'architecture.

De telles solutions existantes d'architecture sont toutefois adaptées généralement à un réseau de distribution électrique avion de type HVDC.

Il existe un besoin de fournir une puissance électrique à courant alternatif aux charges avions et une utilisation optimale de puissance des arbres de turbomachines.

### EXPOSÉ DE L'INVENTION

La présente invention propose une architecture propulsive hybride améliorée permettant l'injection et le prélèvement de puissance sur les arbres haute et basse pression des turbomoteurs pour les besoins propulsifs de l'aéronef, la fourniture de puissance électrique aux charges de l'aéronef, et avantageusement la fourniture de puissance électrique aux charges de systèmes de régulation électrifiés des turbomoteurs de l'aéronef, et ceci de manière optimale et sécurisée.

L'architecture propulsive hybride proposée permet une utilisation optimale de puissance des arbres de turbomachines pour besoin propulsif, le prélèvement et injection de puissance sur les arbres des turbomachines pour besoin propulsif, et un partage de prélèvement de puissance entre les arbres haute pression et basse pression pour des besoins non-propulsifs, tout en garantissant une disponibilité des fonctions et une sureté de fonctionnement.

Selon un mode de réalisation, la présente invention concerne une architecture électrique pour un aéronef à propulsion hybride thermique/électrique, ledit aéronef comportant deux turbomoteurs, ladite architecture comprenant pour chaque turbomoteur:
- un réseau électrique avion à courant alternatif AC incluant un réseau de distribution non-propulsif,
- des premières machines électriques mécaniquement couplées à un arbre haute pression dudit turbomoteur, lesdites premières machines électriques étant configurées pour fonctionner en mode moteur afin de fournir de la puissance propulsive mécanique et en mode générateur pour recevoir de la puissance mécanique et fournir de la puissance électrique,
- des deuxièmes machines électriques mécaniquement couplées à un arbre basse pression dudit turbomoteur et configurées en mode générateur pour recevoir de la puissance mécanique et fournir de la puissance électrique, en particulier à courant alternatif AC
- un module de conversion d'énergie électrique AC/AC réversible agencé entre au moins une première portion de réseau apte à être couplée aux premières machines électriques et au moins une deuxième portion de réseau apte à être couplées aux deuxièmes machines électrique,
- des éléments interrupteurs,
- un système électronique de commande du module de conversion et desdits éléments interrupteurs, configuré pour placer ladite architecture :
- dans au moins un mode de fonctionnement dit « d'hybridation par répartition de puissance » correspondant à une première configuration des éléments interrupteurs dans lequel au moins une deuxième machine est couplée au réseau avion et au moins une première machine est couplée au réseau avion via le module de conversion d'énergie électrique.

En particulier, chaque deuxième machine peut être couplée directement au réseau avion tandis que chaque première machine est couplée au réseau avion indirectement via le module de conversion d'énergie électrique.

Dans ce mode de fonctionnement « d'hybridation par répartition de puissance », la deuxième machine fournit ainsi une première puissance électrique AC audit réseau avion sans convertisseur intermédiaire et en particulier sans passer par ledit module de conversion d'énergie électrique tandis que ladite au moins une première machine fournit une deuxième puissance électrique AC via ledit module de conversion d'énergie électrique.

Un partage de puissance pour un réseau AC est ainsi réalisé tout en limitant le nombre d'éléments, et en particulier de convertisseurs nécessaires pour ce faire.

Le système électronique de commande du module de conversion et desdits éléments interrupteurs est typiquement pourvu d'au moins une unité de commande moteur.

Ainsi, une alimentation AC par le biais des premières machines liées à l'arbre haute pression et par les deuxièmes machines liées à l'arbre basse pression peut être réalisée.

Une architecture suivant l'invention présente pour avantage de conserver un réseau avion en AC et de rendre l'hybridation du moteur indépendante du réseau avion.

Elle permet également de mutualiser le convertisseur de puissance pour réaliser les scénarios d'hybridation.

Une telle architecture peut permettre aux avionneurs de conserver des systèmes existants, par exemple de type ATA24 et des charges électriques éprouvées et matures tout en profitant d'une solution de turbomachine plus performante et économe en consommation carburant.

Avantageusement, dans le mode de fonctionnement « d'hybridation par répartition de puissance », ladite au moins une première machine fournit une première puissance électrique audit réseau avion et ladite au moins une deuxième machine fournit une deuxième puissance électrique audit réseau avion dans lequel les niveaux respectifs de ladite première puissance et de ladite deuxième puissance sont modulables et contrôlés par l'unité de commande moteur.

On peut ainsi réaliser une répartition de puissance entre les arbres BP et HP sous le contrôle de l'unité de commande moteur en fonction de ses besoins de réduction de consommation, de marge d'opérabilité ou d'autres contraintes.

Selon une possibilité de mise en œuvre, le système électronique de commande peut être configuré en outre pour placer ladite architecture : dans au moins un autre mode de fonctionnement dit « d'assistance de l'arbre haute pression » dans lequel ladite au moins une deuxième machine est couplée à ladite au moins une première machine via le module de conversion d'énergie électrique AC/AC afin de fournir une énergie électrique à ladite au moins une première machine fonctionnant en mode moteur. Ainsi, l'architecture peut également permettre un transfert d'énergie de l'arbre basse pression vers l'arbre haute pression.

Selon une possibilité de mise en œuvre, l'architecture peut comprendre en outre au moins une source d'énergie électrique auxiliaire à courant alternatif, en particulier apte à être implantée dans une partie du corps de l'aéronef, le système électronique de commande, étant configuré en outre pour placer ladite architecture : dans au moins un autre mode de fonctionnement dit « de démarrage moteur » dans lequel la source d'énergie électrique auxiliaire est couplée à ladite au moins une première machine électrique par l'intermédiaire des moyens de conversion d'énergie électrique AC/AC, ladite au moins une première machine fonctionnant en mode moteur. Ainsi, une telle architecture est également compatible avec un démarrage électrique de la turbomachine.

Selon une possibilité de mise en œuvre, ladite au moins une deuxième machine électrique peut être formée d'un régulateur et d'un ensemble de trois étages montés en cascade et couplés à un même arbre basse pression de turbomoteur, ledit ensemble étant pourvu :
- d'un premier étage muni d'une génératrice triphasée à aimants permanents pour alimenter un régulateur par le biais d'un courant électrique alternatif en sortie du premier étage,
- d'un deuxième étage muni d'une excitatrice à diodes tournantes pour, à partir d'un courant continu obtenu par redressement dudit courant électrique alternatif, fournir un courant de sortie redressé,
- d'un étage principal pourvu d'une machine synchrone triphasée alimentée par ledit courant de sortie redressé, et produire en sortie un courant de fréquence proportionnelle à la vitesse de rotation de l'arbre basse pression.

Le module convertisseur AC/AC permet de dimensionner et faire fonctionner ladite au moins une première machine formant un moto-générateur à haute vitesse et d'obtenir une optimisation de la masse de machine et de son convertisseur.

Le module de conversion d'énergie électrique AC/AC est formé d'un convertisseur AC/AC matriciel formé d'une matrice d'interrupteurs bidirectionnels ou bien d'un cyclo-convertisseur.

Selon un autre aspect, la présente demande vise à protéger un Aéronef à propulsion hybride thermique/électrique comprenant deux turbomoteurs, chaque turbomoteur comprenant au moins un arbre haute pression et un arbre basse pression, et pour chaque turbomoteur, ledit aéronef comprend une architecture électrique telle que définie plus haut.

### BRÈVE DESCRIPTION DES DESSINS

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig.1] représente schématiquement une architecture électrique pour aéronef à propulsion hybride thermique/électrique permettant d'alimenter un réseau AC et de réaliser différents scénarios d'hybridation de la turbomachine ;
[Fig.2] représente schématiquement différents étages d'une machine électrique couplée à un arbre basse pression et susceptible d'être intégrée à une architecture électrique suivant la présente invention ;
[Fig.3A]
[Fig.3B]
[Fig.3C]

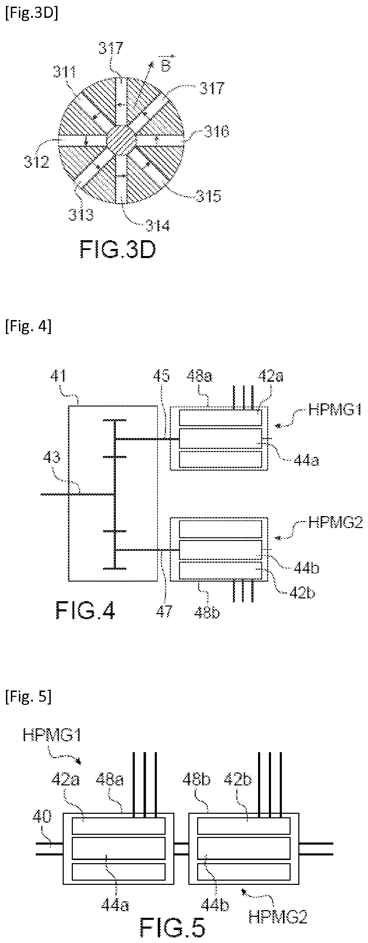

[Fig.3D] représentent schématiquement différents exemples de réalisation d'une machine à aimant permanents intégrée à un étage d'une machine électrique couplée à un arbre basse pression et intégrée à une architecture suivant la présente invention ;
[Fig. 4]
[Fig. 5]
[Fig. 6]
[Fig. 7]

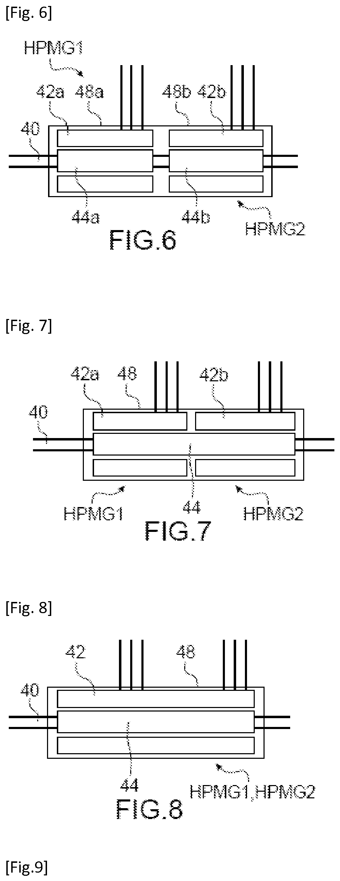

[Fig. 8] représentent schématiquement différents modes de réalisation de premières machines électriques couplées chacune à un arbre haute pression ;

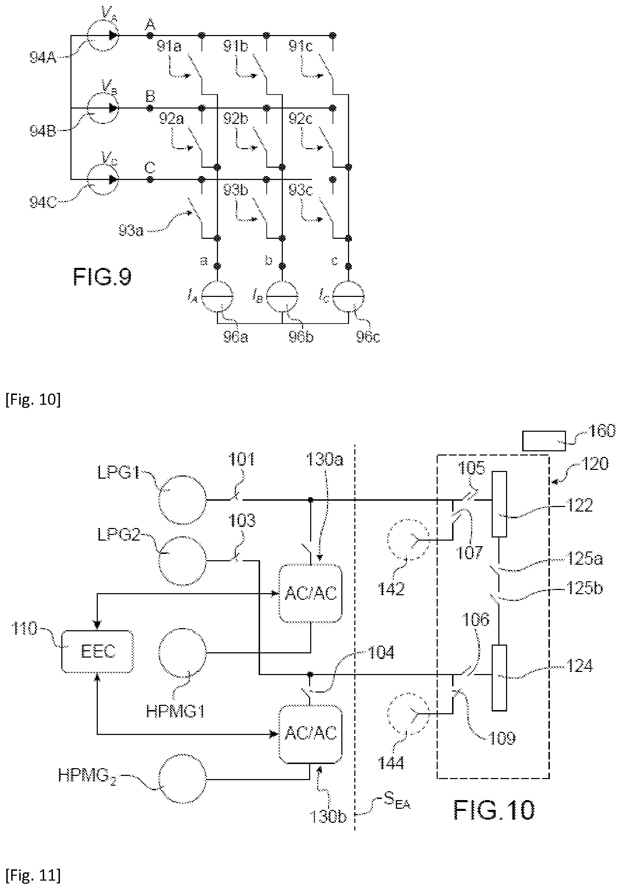

[Fig.9] représente schématiquement un exemple de convertisseur AC/AC réversible à agencement matriciel et susceptible d'être intégré à une architecture électrique suivant l'invention ;
[Fig. 10] représente schématiquement une architecture électrique selon la présente invention ;

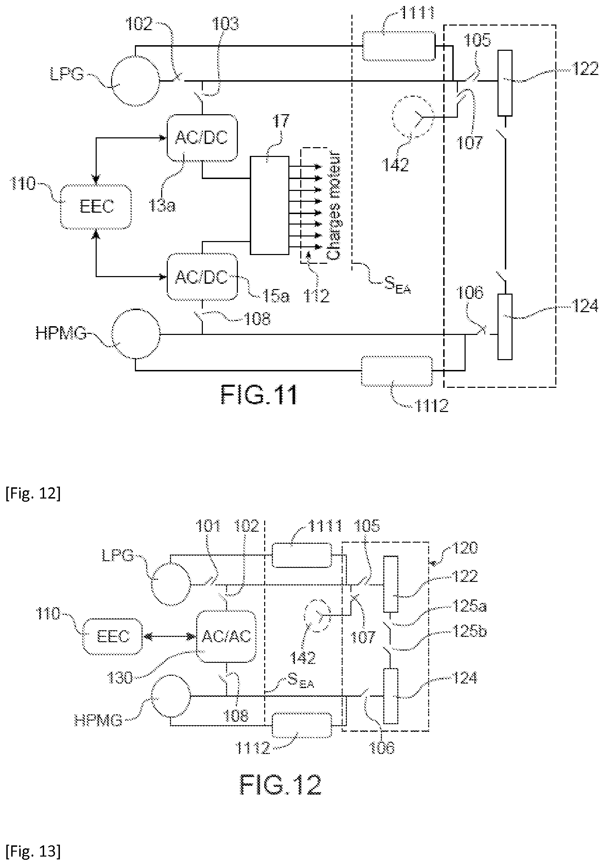

[Fig. 11] représente schématiquement une autre architecture électrique ;
[Fig. 12] représente schématiquement une autre architecture électrique;

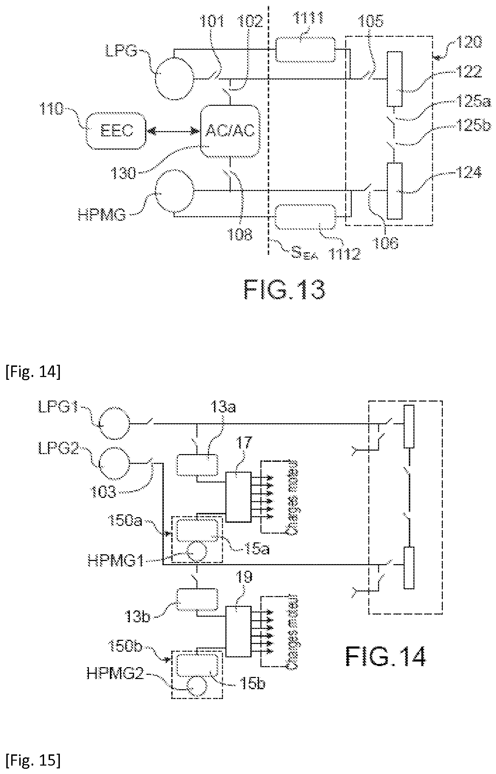

[Fig. 13] représente schématiquement une autre architecture électrique;

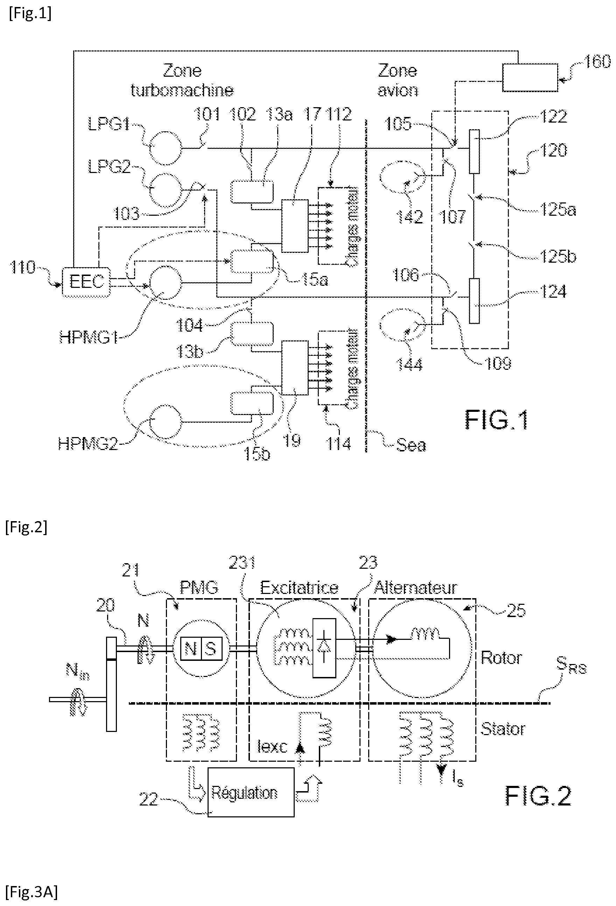

[Fig. 14] représente une variante de l'architecture électrique illustrée sur la figure 1 ;

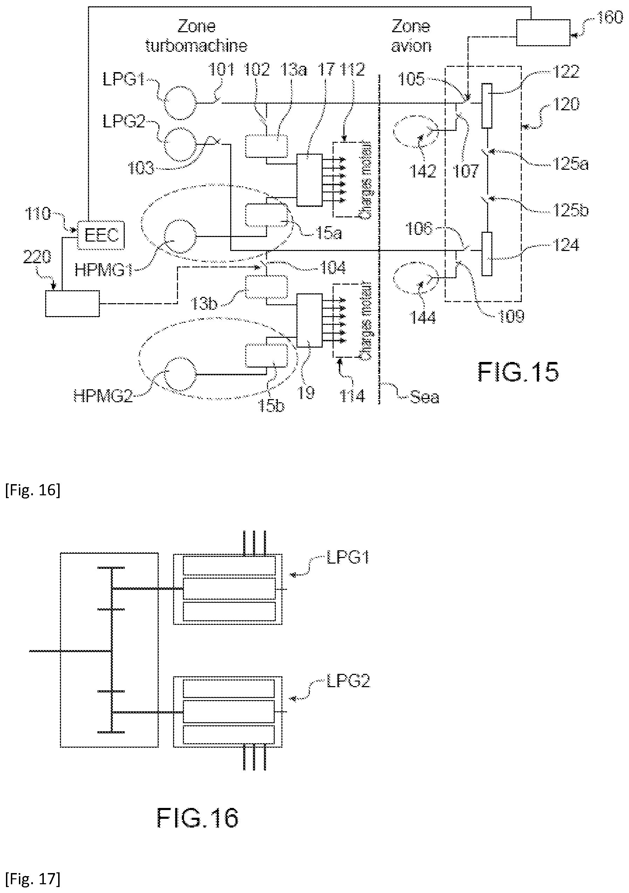

[Fig. 15] représente une variante de l'architecture électrique illustrée sur la figure 1 ;
[Fig. 16]
[Fig. 17]

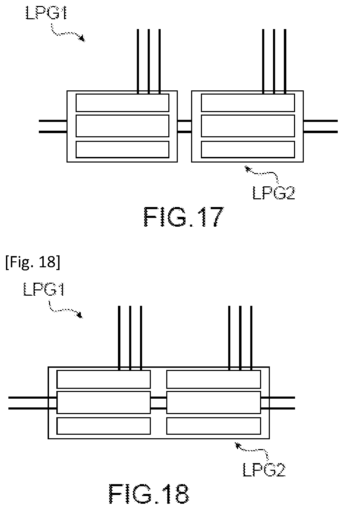

[Fig. 18] représentent schématiquement différents modes de réalisation de deuxièmes machines électriques couplées chacune à un arbre basse pression ;

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

La figure 1 donne un exemple particulier d'architecture électrique prévue ici pour un aéronef de type bimoteurs à propulsion hybride thermique/électrique.

L'architecture comporte une partie associée au turbomoteur et une partie associée à l'aéronef, le trait S_{EA} en pointillés représentant la séparation entre la partie de l'architecture située au niveau du turbomoteur et la partie de l'architecture située au niveau du corps de l'aéronef.

L'architecture de la figure 1 n'est ici décrite et représentée que pour un seul des deux turbomoteurs de l'aéronef, mais est composée de deux parties quasiment symétriques chacune associée à un turbomoteur.

L'architecture électrique permet ici une fourniture d'énergie électrique AC à un réseau 120 dit « avion » à partir des arbres haute-pression HP et basse pression LP. Le réseau avion 120 est ici un réseau électrique alternatif à fréquence variable de 360-800Hz et à niveau de tension efficace par exemple de 115V ou de 230V. Le réseau avion 120 comporte une première portion 122 et une deuxième portion 124 qui peuvent être ségréguées l'une de l'autre par l'intermédiaire d'élément(s) interrupteur(s) 125a, 125b situés entre les deux portions 122, 124. Chaque portion 122, 124 peut intégrer un réseau de distribution électrique non propulsif destiné à alimenter en électricité des équipements liés au système non propulsif et désignés également comme des « charges avion ».

L'architecture est également raccordée, dans cet exemple, par l'intermédiaire d'un bus de distribution 17, 19 électrique, à un premier ensemble 112, et un deuxième ensemble 114 de charges dites « charges moteur ». Ces ensembles 112, 114 sont typiquement alimentés en courant continu DC haute tension (HVDC), par exemple fonctionnant à une tension de l'ordre de 540 V ou de 800 V.

Dans l'exemple de réalisation illustré, les deux ensembles 112, 114 de charge associées au même turbomoteur peuvent être indépendants l'un de l'autre et/ou ségrégués l'un de l'autre.

L'architecture est dans cet exemple composée de canaux symétriques ou quasi symétriques l'un de l'autre. L'architecture est ainsi pourvue de plusieurs machines électrique HPMG1, HPMG2 appelées « première(s) machine(s) électrique(s) » chacune mécaniquement couplée, par accouplement direct ou par le biais d'une boîte de réduction, i.e. d'un système d'engrenages, à un arbre haute pression de la même turbomachine.

Chaque première machine électrique HPMG1, HPMG2 est configurée pour fonctionner en mode moteur pour fournir de la puissance propulsive mécanique et en mode générateur pour recevoir de la puissance mécanique et fournir de la puissance électrique. Chaque première machine électrique HPMG1, HPMG2 assure des fonctions d'injection et de prélèvement de puissance mécanique dédiées aux besoins propulsifs du turbomoteur, incluant l'injection de puissance pour le démarrage, et l'injection de puissance pour assistance de l'arbre haute pression constituant une hybridation parallèle du turbomoteur.

Les premières machines électriques HPMG1, HPMG2 remplissent également des fonctions de génération de puissance électrique pour les besoins de l'aéronef et du turbomoteur.

Chaque première machine électrique HPMG1, HPMG2 est donc une source électrique lorsqu'elle fonctionne en mode générateur, et une charge lorsqu'elle fonctionne en mode moteur, notamment au démarrage du turbomoteur. Les premières machines électriques HPMG1 et HPMG2 peuvent être par exemple des moto-générateurs, en particulier à aimants permanents, couplés à l'arbre haute pression (HP).

Chaque première machine électrique HPMG1, HPMG2 peut être mécaniquement couplée à l'arbre haute pression en liaison directe ou en variante au moyen d'un boîtier d'accessoires AGB (acronyme de l'expression anglaise « Accessory Gear Box »). Le boîtier d'accessoires peut être dédié aux premières machines électriques HPMG1, HPMG2. En particulier, un renvoi d'angle peut être agencé entre chaque première machine électrique HPMG1, HPMG2 et l'arbre haute pression.

L'architecture comprend également une pluralité machines électriques LPG1, LPG2 mécaniquement couplées, par accouplement direct ou par le biais d'une boîte de réduction, à un arbre basse pression de turbomoteur. Ces machines électriques, appelées « deuxièmes machines » LPG1 et LPG2 assurent des fonctions de prélèvement de puissance mécanique dédiée au besoin propulsif. Elles sont ici configurées pour fonctionner en mode générateur pour recevoir de la puissance mécanique et fournir en conséquence de la puissance électrique, en particulier sous forme d'un signal AC. Les deuxièmes machines électriques LPG1 et LPG2 assurent des fonctions de génération de puissance électrique pour les besoins de l'aéronef et du turbomoteur. Les deuxièmes machines électriques LPG1 et LPG2 sont avantageusement des générateurs à courant alternatif, en particulier de type à 3 étages couplés à l'arbre basse pression (BP), et dont un exemple de réalisation plus détaillée sera fourni plus loin.

Dans cet exemple, chaque première machine électrique HPMG1, HPMG2, est reliée à un convertisseur AC/DC 15a, 15b réversible. Les convertisseurs 15a, 15b permettent ici notamment d'adapter la puissance électrique fournie sous forme de tension alternative ou de courant alternatif par la première machine HPMG1, HPMG2 à la tension du réseau de distribution électrique propulsif, typiquement de type HVDC, et de réguler cette tension à une valeur prédéterminée. Cette valeur peut être de l'ordre de plus ou moins quelques pourcents de la valeur de tension nominale Uₙₒₘ, par exemple entre - 1 ou -2 % de Uₙₒₘ, et + 1 % ou + 2% de la tension nominale Uₙₒₘ avec Unom qui peut être par exemple de l'ordre de 540V ou de 800V.

Chaque deuxième machine électrique LPG1, LPG2, est ici également apte à être reliée à un premier convertisseur AC/DC 13a, 13b réversible. Les convertisseurs 13a, 13b, permettent également, dans cet exemple, , notamment d'adapter une puissance électrique émanant de la deuxième machine LPG1, LPG2 sous forme de tension alternative ou de courant alternatif à la tension du réseau de distribution électrique propulsif. Outre une distribution de puissance HDVC à un ou plusieurs ensembles de charges moteur, l'architecture est configurée pour fournir une énergie électrique AC au réseau avion 120. Pour cela, dans un premier canal, la deuxième machine LPG1 liée à l'arbre basse pression, est apte à être couplée directement à la première portion 122 du réseau avion 120. Ainsi, la deuxième machine LPG1 peut fournir une puissance électrique AC directement à la première portion 122 du réseau avion 120 sans convertisseur intermédiaire, et en particulier sans passer par la succession de convertisseurs AC/DC 13a, 15a.

Dans ce premier canal, la première machine HPMG1 liée à l'arbre haute pression, peut être couplée à la première portion 122 du réseau avion 120 via la succession de convertisseurs AC/DC 15a, 13a réversibles qui forme alors un convertisseur AC/AC réversible. Il y a ainsi un couplage indirect entre la première machine HPMG1 et la première portion 122 du réseau avion 120.

Dans un deuxième canal, l'autre deuxième machine LPG2 liée à l'arbre basse pression, peut être couplée directement à la deuxième portion 124 du réseau avion 120. Ainsi, la machine LPG2 peut fournir une puissance électrique AC à la deuxième portion 124 du réseau avion 120 sans convertisseur intermédiaire, et en particulier sans passer par la succession de convertisseurs AC/DC 13b, 15b.

Dans ce deuxième canal, l'autre première machine HPMG2 liée à l'arbre haute pression, est apte à être couplée à la deuxième portion 124 du réseau avion 120 via la succession de convertisseurs AC/DC 15b, 13b réversibles qui forme alors un autre convertisseur AC/AC réversible. Il y a ainsi un couplage indirect entre la machine HPMG2 et la deuxième portion 124 du réseau avion 120.

L'architecture est également pourvue d'éléments interrupteurs 101, 102, 103, 104, 105, 106, 107, 109 pour alternativement déconnecter et connecter entre elles certaines portions de réseau. L'état passant (fermé) ou bloqué (ouvert) des éléments interrupteurs est contrôlé par un système électronique de commande.

Les éléments interrupteurs 101, 102, 103, 104 dans la partie turbomachine peuvent être commandés par le biais d'une unité de commande électronique 110 de ce système, typiquement une unité de commande moteur EEC (pour « Electronic Engine Controller ») ou FADEC (« pour Full Authority Digital Engine Control ») ou un calculateur du réseau moteur dédié (non représenté sur les figures).

L'unité de commande électronique 110, peut être dotée d'une architecture matérielle d'un ordinateur et comprend typiquement un processeur, une mémoire non-volatile, une mémoire volatile, et une interface. Le processeur permet d'exécuter des programmes d'ordinateur mémorisés dans la mémoire non-volatile, en utilisant la mémoire volatile. L'interface permet d'acquérir des signaux représentatifs du fonctionnement de la turbomachine et d'envoyer des signaux de commande. L'unité de commande électronique 110 peut comprendre un calculateur ou être associée et communiquer avec un autre calculeur au niveau moteur.

Les éléments interrupteurs 105, 106, 107, 109 agencés dans la partie avion peuvent être quant à eux commandés par le biais d'un ou plusieurs calculateurs 160 dits « avion », typiquement distincts de celui ou ceux de la partie turbomachine. Pour ne pas surcharger la figure, seule la commande de l'interrupteur 105 est illustrée sur la figure 1.

Au sein du système électronique de commande, l'unité de commande 110 peut être reliée en réseau avec le ou les calculateurs 160 avion.

Les éléments interrupteurs 101, 102, 103, 104, 105, 106, 107, 109 peuvent être par exemple sous forme de dispositifs électromécaniques tels que des contacteurs. Ces contacteurs peuvent également permettre une isolation de parties de l'architecture, par exemple de parties en défaut.

L'architecture électrique est susceptible d'adopter différents modes de fonctionnement correspondant à différentes configurations et états respectifs d'éléments interrupteurs auxquelles elle est associée.

L'architecture électrique a ainsi la particularité de pouvoir adopter un premier mode de fonctionnement dit « d'hybridation par équilibrage de puissance » correspondant, dans le premier canal, à une première configuration d'éléments interrupteurs 101, 105, 102 ici mis dans un état passant (i.e. fermé) pour permettre à la deuxième machine LPG1, d'être couplée à la portion 122 du réseau avion 120 et lui fournir une puissance électrique et à la succession de convertisseurs 15a, 13a d'être couplée à la portion 122 du réseau avion 120 afin également de lui fournir une puissance électrique en provenance de la première machine HPMG1.

De même, dans le deuxième canal, dans cet exemple d'agencement semblable au premier, la machine LPG2 peut être couplée au réseau avion 120 afin de fournir une puissance électrique AC au réseau avion 120. Pour cela, un élément interrupteur 103 situé entre une sortie la deuxième machine LPG2 et le réseau avion 120 est mis dans un état passant (i.e. fermé), tandis qu'un autre élément interrupteurs 106 situé entre l'élément interrupteur 103 et le réseau avion 120 est également mis dans un état passant (i.e. fermé). La machine HPG2 est indirectement couplée au réseau avion 120 afin de fournir une puissance électrique AC au réseau 120 via la succession de convertisseurs 15b, 13b. Pour cela, un élément interrupteur 104 situé entre le réseau avion 120 et la succession de convertisseurs AC/DC 13b, 15b réversibles est mis dans un état fermé.

Dans ce mode de fonctionnement, deux convertisseurs statiques AC/DC réversibles 13a et 15a (resp. 13b et 15b) insérés en cascade entre chaque voie de génération associée à l'arbre Haute Pression et à l'arbre Basse Pression forment un convertisseur AC/AC pour produire une puissance AC à destination du réseau avion 120.

Dans le mode de fonctionnement d'hybridation par équilibrage de puissance (« Power balancing ») entre les arbres HP et BP: le convertisseur AC/AC 13a-15a est synchronisé côté réseau avion 120 sur la fréquence de la deuxième machine LPG1 et permet une répartition de la fourniture de puissance entre les arbres Haute Pression et Basse Pression sur consigne de l'unité de commande EEC 110.

Un tel mode peut fonctionner en deux phases: une phase de couplage (ou mise en parralèle) des deux machines LPG1 et HPG1 (resp. LPG2 et HPG2) où le convertisseur 13a (resp. 13b) génère une tension synchronisée en amplitude et en fréquence avec la tension de la deuxème machine LPG1 (res. LPG2) pour permettre la mise en parrallèle des deux génératrices par la fermeture de l'élément interrupteur 102 (resp. 104). Ensuite, en mode génération avec équilibrage de puissance, les consignes vers la deuxième machine LPG1 et le convertisseur 13a (resp. LPG2 et convertisseur 13b) sont ajustées pour réaliser la répartition des prélèvement de puissance entre les deux arbres haute pression et basse pression. Dans les deux cas de figure, la fréquence de sortie du convertisseur DC/AC 13a (resp. 13b) est de préférence identique à la fréquence de la deuxième machine LPG1 (resp. LGP2).

L'unité de commande EEC 110 permet de moduler les puissances fournies respectivement par la première machine HPMG1 (resp. HPMG2) et par la deuxième machine LPG1 (resp. LPG2), et de contrôler la proportion délivrée par chacune desdites première machine HPMG1 (resp. HPMG2) et deuxième machine LPG1 (resp. LPG2), en particulier au réseau avion 120. On peut également répartir la puissance totale prélevée pour alimenter les charges avion et les charges moteur entre les arbres HP et BP.

Selon le point de fonctionnement de la turbomachine, l'unité de commande EEC 110 peut générer des signaux de consignes (Un signal de consignes matérialisé par exemple sur la figure 1 par une flèche de EEC vers HPMG1) de répartition de puissance vers les controlleurs des générateurs de la turbomachine pour des besoins de réduction de consommation carburant ou pour améliorer ses marges d'opérabilité.

Plusieurs manières peuvent être envisagées pour réaliser cette répartition : soit une répartition de la puissance totale par pourcentage entre les deux générateurs ou bien une limitation du prélévement sur un arbre pour forcer le prélèvement sur l'autre arbre. Les générateurs étant régulées en tension au point de régulation du réseau électrique, lorsqu'on limite le prélèvement sur un générateur, le deuxième générateur compense la part de courant manquante pour maintenir la tension au point de régulation.

La répartition de puissance est ajustée en fonction des besoins de la turbomachine. On répartit ici la puissance totale prélevée pour alimenter les charges avion situées dans le réseau avion 120 et les charges moteur 112, 114 entre les arbres HP et BP.

Dans ce mode de fonctionnement d'hybridation par équilibrage de puissance, le premier convertisseur 15a (resp. 15b) en sortie de la première machine HPMG1 remplit la fonction d'un redresseur AC/DC actif convertissant un courant alternatif ou une tension alternative en sortie de la première machine HPMG1 en un courant ou une tension continu(e). Le second convertisseur 13a (resp. 13b) quant à lui remplit la fonction d'un onduleur DC/AC convertissant courant/tension continu issu du premier convertisseur 15a (resp. 15b) en courant et courant/tension alternatifs avec une même fréquence de signal électrique que le signal électrique issu de la deuxième machine LPG1 (resp. LPG2). L'amplitude du signal électrique issu du premier convertisseur 15a (resp. 15b), en dehors de la séquence de couplage, est ajustable selon les besoins d'équilibrage de puissance comme décrit plus haut.

Un autre type d'hybridation est possible avec l'architecture illustrée sur la figure 1. Ainsi, selon un autre mode de fonctionnement dit « d'assistance par partage de puissance » (« Power sharing »), la deuxième machine LPG1 (resp. LPG2) est couplée à la première machine HPMG1 (resp. HPMG2) via la succession de convertisseurs 13a, puis 15a (resp. 13b puis 15b) du module de conversion d'énergie électrique afin de fournir une puissance électrique à ladite première machine HPMG1 (resp. HPMG2) fonctionnant alors en mode moteur. Un transfert d'énergie électrique d'une deuxième machine LPG1 (resp. LPG2) associée à l'arbre basse pression vers une première machine électrique HPMG1 (resp. HPMG2) associée à l'arbre haute pression peut être opérée afin de réaliser une assistance de l'arbre haute pression à partir de l'arbre basse pression.

Dans ce mode de fonctionnement, le deuxième convertisseur 13a (resp. 13b) forme un redresseur AC/DC et a pour fonction de redresser un courant ou une tension alternative en provenance de la deuxième machine LPG1 (resp. LPG2). Le premier convertisseur 15a (resp. 15b) quant à lui forme un onduleur DC/AC convertissant courant/tension continu issu du deuxième convertisseur 13a (resp. 13b) en courant et courant/tension alternatifs.

L'architecture comprend également dans cet exemple, pour chaque canal, une source d'énergie auxiliaire 142, 144 AC afin de disposer d'une source supplémentaire capable de fournir de l'énergie au réseau propulsif et/ou non propulsif. Comme représenté sur la figure 1, la source d'énergie auxiliaire 142, 144 peut être agencée dans la partie aéronef de l'architecture et donc être implantée dans le corps de l'aéronef. La source d'énergie auxiliaire 142, 144 AC peut être reliée ou isolée du reste de l'architecture en fonction de l'état (respectivement fermé ou ouvert) d'un élément interrupteur 107, 109.

La source d'énergie auxiliaire 142, 144 peut être couplée au réseau de distribution électrique propulsif et configurée pour fournir de l'énergie à la première machine HPMG1, HPMG2 lorsque cette dernière fonctionne en mode moteur et pour alimenter le réseau de distribution électrique propulsif lorsque les machines électriques ne sont pas disponibles. La source d'énergie auxiliaire 142, 144 peut être utilisée à des fins d'optimisation énergétique ou de dimensionnement. La source d'énergie auxiliaire 142, 144 peut comprendre une machine électrique auxiliaire APU (« AUXILIARY POWER UNIT ») dotée d'un générateur électrique : typiquement de type alternateur.

En variante ou en combinaison des sources d'énergies auxiliaires 142, 144 illustrées, un groupe de parc disposé au sol peut également servir d'alimentation auxiliaire et permettre d'effectuer un démarrage moteur au sol tout en alimentant les charges avion et moteur. La source d'énergie auxiliaire peut être également une alimentation électrique obtenue à partir du des autres génératrices de l'autre turbomachine. Une telle alimentation permet alors de réaliser un démarrage croisé (« cross-start » selon la terminologie anglo-saxonne), dans lequel on, démarre un moteur à partir du moteur opposé.

Selon un mode de fonctionnement particulier, le système de commande peut placer l'architecture dans une autre configuration des éléments interrupteurs dans lequel la source d'énergie électrique auxiliaire 142 (resp. 144) est couplée à la première machine électrique HPMG1 (resp. HPMG2) par l'intermédiaire de la succession de convertisseurs AC/DC et AC/DC réversibles 13a, 15a (resp. 13b, 15b) et formant un convertisseur AC/AC. La première machine HPMG1, HPMG2 fonctionne alors en mode moteur. Un tel mode de fonctionnement est en particulier utilisé pour effectuer un démarrage moteur à partir d'une source avion. Dans un tel mode de fonctionnement, les éléments interrupteurs 107, 103 (resp. 109, 104) sont fermés pour permettre un tel couplage. En mode de démarrage moteur, au sol ou en vol, la deuxième machine LPG1, (resp. LPG2) est déconnectée en ouvrant les éléments interrupteurs 101, 103. Les charges avion et moteur peuvent quant à elles rester connectées.

Dans ce mode de fonctionnement, le deuxième convertisseur 13a (resp. 13b) forme un redresseur AC/DC et a pour fonction de redresser un courant ou une tension alternative en provenance de la source d'énergie électrique auxiliaire 142 (resp. 144). Le premier convertisseur 15a (resp. 15b) quant à lui forme un onduleur DC/AC convertissant courant/tension continu issu du deuxième convertisseur 13a (resp. 13b) en courant et courant/tension alternatifs.

Dans l'ensemble des modes de fonctionnement décrits, les convertisseurs AC/DC 13a, 15a, 13b, 15b, réversibles sont interconnectés de manière à pouvoir également permettre une dérivation de puissance sur un bus 17, 19 intermédiaire HVDC vers des charges de la turbomachine. Une double source aux charges moteur est ainsi offerte améliorant de ce fait leur disponibilité.

L'unité de commande EEC 110 est un calculateur qui gère le fonctionement de la turbomachine et qui décide des scénarios d'hybridation et des propostions de puissance à prélever sur chaque arbre HP et BP. Il envoie à cet effet des signaux électronique de consignes vers les convertisseurs de puissance 13a-15a, 13b-15b qui se chargent de gérer la proportion de puissance à transférer entre chacune des parties Basse Pression et Haute Pression. Les convertisseurs 13a-15a, 13b-15b comme indiqué plus haut peuvent être munis de leurs propres cartes de contrôle rapproché. La gestion du réseau électrique et des élements interrupteurs (contacteurs) est dans l'exemple de réalisation illustré sur la figure 1 réalisée par l'unité de commande EEC 110. Dans ce cas l'unité de commande EEC 110 héberge des fonctions supplémentaires de gestion du réseau moteur.

Selon une variante représentée sur la figure 15, il est également possible de réaliser ce contrôle des contacteurs, en particulier des élements interrupteurs 101, 102, 103, 104 par le biais d'une autre unité de contrôle distincte 220 de l'unité de commande 110, mais qui communique et échange des signaux électroniques de contrôle avec cette dernière. L'unité de contrôle 220 peut être dotée d'un architecture matérielle semblable ou reprenant des éléments de l'unité de commande 110. L'unité de contrôle 220 est typiquement pourvue d'un processeur, d'une mémoire non-volatile, d'une mémoire volatile, et d'une interface. Cette unité 220 de contrôle distincte, peut également être prévue pour gérer l'ensemble du système électrique propulsif en coordination avec l'unité de commande EEC 110. L'unité de contrôle 220 serait alors en interface avec le EEC 110 et l'unité 160 d'une part pour échanger les informations et les ordres de commande, et d'autres part avec les convertisseurs 13a, 13b, 15a, 15b et l'ensemble des interrupteurs du système propulsif pour assurer leur contrôle-commande.

Ce principe est applicable aux modes de réalisation des Figures 1, 10, 11, 12, 13, 14 et 15. La deuxième machine électrique LPG1, LPG2 couplée à l'arbre basse pression peut être, comme dans l'exemple de réalisation illustré sur la figure 2, une machine synchrone à trois étages 21, 23, 25, intégrant une unité 22 de commande générateur ou GCU ("Generator Control Unit"). Une telle unité est dotée typiquement d'un régulateur de tension et d'un ensemble de circuits électronique analogiques et/ou logiques de contrôle et de protection. L'unité 22 de commande fait typiquement partie de l'unité de commande 160 de la figure 1 dans la zone avion.

Ces étages 21, 23, 25 sont typiquement montés en cascade sur un même arbre 20 mécanique basse pression BP. Un trait S_{RS} en pointillé délimite les parties rotor respectives des étages 21, 22, 23, et les parties stator respectives de ces mêmes étages 21, 22, 23 représentées de manière schématique.

Un premier étage 21 est doté d'une génératrice de type PMG (pour « Permanent Magnet Generator » c'est à dire « générateur à aimants permanents »), typiquement triphasé et qui alimente l'unité 22 de régulation par le biais d'un courant électrique alternatif.

Un deuxième étage 23 juxtaposé au premier étage est quant à lui pourvu d'un générateur synchrone triphasée inversé servant d'excitatrice.

Le courant continu DC fixe de la partie excitatrice de ce deuxième étage 23 est produit en sortie de l'unité 22 de régulation sous forme d'un courant DC I_{exc} par redressement d'un courant AC fournit par la génératrice de type PMG. Un bobinage principal 231 du deuxième étage se trouve sur la partie tournante et débite un courant redressé par des diodes tournantes 233 montées sur le même arbre 20. Les diodes 233 sont reliées en sortie à une partie excitatrice d'un troisième étage 25 encore appelé « étage principal ».

Le troisième étage 25 juxtaposé au deuxième étage réalise une fonction d'alternateur et se trouve sous forme d'une machine synchrone triphasée à rotor bobiné. Sa partie rotor est alimentée par le deuxième étage 23 en courant continu Ir. Le bobinage principal monté sur sa partie stator est triphasé et connecté à une portion réseau à alimenter en courant alternatif. La fréquence du courant Is fourni en sortie de la première machine LPG1, LPG2 est proportionnelle à la vitesse de rotation de l'arbre basse pression.

En revanche, pour le rotor de la machine à aimant permanents, ce dernier est muni d'aimants permanents arrangés de manière à reproduire un champ tournant dans l'entrefer.

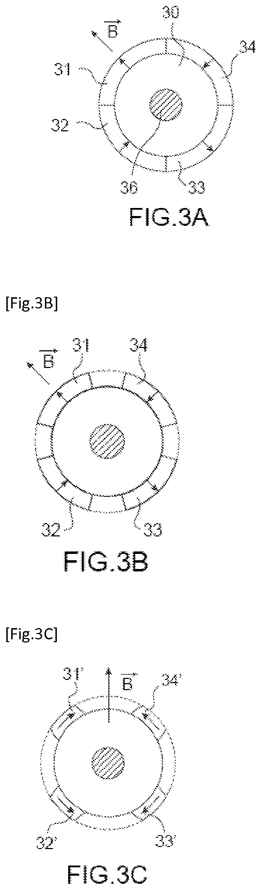

Différents agencements des machines HPMG1 (resp. HPMG 2) sont possibles comme cela est montré sur les figures 3A-3D.

Selon une première possibilité de réalisation (figure 3A) à aimants jointifs et à aimantation radiale, le rotor est doté d'aimants, dans cet exemple de réalisation particulier de quatre d'aimants 31, 32, 33, 34, accolés les uns aux autres et disposés le long d'un contour de forme circulaire, les aimants 31, 32, 33, 34, ayant chacun une aimantation radiale et des aimantations respectives de sens opposés entre un aimant donné et ses voisins auxquels cet aimant donné est accolé. Les aimants 31, 32, 33, 34 peuvent être répartis autour d'une culasse 30 cylindrique d'inducteur agencée autour d'un induit 36.

Une deuxième possibilité de réalisation (figure 3B), prévoit un rotor muni, comme dans l'exemple précédent, avec un agencement des aimants 31, 32, 33, 34, qui diffère de l'exemple précédent en ce que cette fois ils sont séparés deux à deux par un espace donné et/ou un matériau non-magnétique.

Une troisième possibilité de réalisation, cette fois à aimantation tangentielle, peut être prévue. Comme illustré sur la figure 3C, le rotor peut être dans ce cas muni d'aimants 31', 32', 33', 34' ayant une disposition semblable à la précédente, mais avec des aimantations respectives dans une direction tangentielle par rapport au contour de forme circulaire autour duquel ils sont répartis.

Une quatrième possibilité de mise en œuvre dite à « concentration de flux » est illustrée sur la figure 3D. Elle prévoit des aimants 311, 312, 313, 315, 316, 317, 318 séparés deux à deux par une pièce polaire et répartis régulièrement autour et contre l'induit. Les aimants 311, 312, 313, 315, 316, 317, 318 s'étendent radialement tout en ayant une aimantation de direction tangentielle.

Pour les premières machines HPMG1 et HPMG2 de l'agencement à deux canaux décrit précédemment en lien avec la figure 1, différentes configurations peuvent être prévues afin d'obtenir deux alimentations électriques équivalentes à deux machines liées à l'arbre haute pression HP. En particulier, comme représenté sur les figures 4 à 8, différentes configurations sont possibles selon le degré de ségrégation souhaité.

La figure 4 donne une première configuration avec une ségrégation complète des machines électriques. Les machines électriques HPMG1, HPMG2 sont mécaniquement couplées à l'arbre haute pression par l'intermédiaire d'une boîte d'accessoires 41. L'entrée mécanique 43 du boîtier d'accessoires 41 est destinée à être couplée à l'arbre haute pression. Une première sortie mécanique 45 du boîtier d'accessoires 41 est couplée à la première machine électrique HPMG1, et une deuxième sortie mécanique 47 du boîtier d'accessoires 41 est couplée à l'autre machine électrique HPMG2. Chaque machine électrique HPMG1, HPMG2 comporte un stator 42a, 42b, un rotor 44a, 44b, un carter 48a, 48b qui lui est propre. Les machines électriques HPMG1, HPMG2 sont ségréguées l'une de l'autre sur le boîtier d'accessoires 41. Les machines électriques HPMG1, HPMG2 peuvent ainsi avoir une vitesse de rotation différente de la vitesse de rotation de l'arbre haute pression et selon un rapport de multiplication défini par le boîtier d'accessoires. Les deux machines peuvent tourner à la même vitesse mais dans des sens de rotation opposés imposés par le boitier d'accessoires.

Une deuxième configuration, illustrée sur la figure 5, prévoit cette fois les machines électriques HPMG1, HPMG2 mécaniquement couplées à l'arbre haute pression 40 en liaison directe. Les machines électriques HPMG1, HPMG2 tournent ainsi à la même vitesse que l'arbre haute pression. Chaque machine électrique HPMG1, HPMG2 est pourvue d'un stator 42a, 42b, d'un rotor 44a, 44b, et d'un carter 48a, 48b qui lui est propre.

Une troisième configuration illustrée sur la figure 6 représente les machines électriques HPMG1, HPMG2 mécaniquement couplées à l'arbre haute pression 40 en liaison directe. Chaque machine électrique HPMG1, HPMG2 comporte un stator 42a, 42b et un rotor 44a, 44b qui lui est propre, et un carter 48 qui est commun aux deux machines électriques. Les machines électriques HPMG1, HPMG2 sont ségréguées l'une de l'autre, de façon interne, au moyen des circuits magnétiques et électriques (non représentés).

La figure 7 donne cette fois une configuration des machines électriques HPMG1, HPMG2 mécaniquement couplées à l'arbre haute pression 40 en liaison directe et un carter 48 qui est commun aux deux machines électriques. Chaque machine électrique HPMG1, HPMG2 comporte un stator 42a, 42b qui lui est propre, et un rotor 44, ainsi qu'un circuit magnétique de rotor commun. Les machines électriques HPMG1, HPMG2 sont ségréguées l'une de l'autre de façon magnétique et électrique sur les stators 42a, 42b.

Une autre configuration est donnée sur la figure 8 avec, là encore, les machines électriques HPMG1, HPMG2 mécaniquement couplées à l'arbre haute pression 40 en liaison directe. Les machines électriques HPMG1, HPMG2 comportent un stator 42, un rotor 44 et un carter 48, qui sont communs aux deux machines électriques, ainsi qu'un circuit magnétique de stator et de rotor commun (non représentés). Les machines électriques HPMG1, HPMG2 sont ségréguées l'une de l'autre de façon électrique sur le stator 42.

De même, pour les machines LPG1 et LPG2 différentes configurations peuvent être prévues.

La figure 16 donne une première configuration avec une ségrégation complète des machines électriques LPG1, LPG2.

Une deuxième configuration, illustrée sur la figure 17, prévoit cette fois les machines électriques LPG1, LPG2 mécaniquement couplées à l'arbre basse pression en liaison directe.

Une troisième configuration illustrée sur la figure 18 représente les machines électriques LPG1, LPG2 mécaniquement couplées à l'arbre basse pression en liaison directe, chaque machine électrique LPG1, LPG2 comportant un stator et un rotor qui lui est propre, et un carter qui est commun aux deux machines électriques.

Dans l'exemple d'architecture décrit précédemment en liaison avec la figure 1, chaque première machine HPMG1 (resp. HPMG2) est associée à un convertisseur statique AC/DC 15a (resp. 15b) qui se trouve en sortie de la première machine HPMG1, HPMG2. Une première machine HPMG1, HPMG2 et son convertisseur associé peuvent être séparés de sorte à être situés chacun dans des boitiers distincts. En variante, on peut prévoir, comme dans l'exemple illustré sur la figure 14 d'intégrer la première machine HPMG1 et son convertisseur AC/DC réversible associé dans un même et seul ensemble 150a (resp. 150b) appelé « machine intelligente » («°smart-machine » selon la terminologie anglo-saxonne) le générateur et le convertisseur étant alors typiquement situés dans un même carter. Une telle intégration permet d'optimiser la masse et l'encombrement dans la mesure où l'on peut éventuellement s'affranchir de certains câbles, d'un filtrage CEM (CEM pour « compatibilité électromagnétique »), d'un circuit de refroidissement.

Selon l'invention revendiquée, les convertisseurs AC/DC réversibles 13a et 15a ou 13b et 15b mis en cascade sont remplacés par un seul convertisseur AC/AC, de type cyclo-convertisseur ou convertisseur AC/AC matriciel.

Un exemple de schéma électrique équivalent de convertisseur matriciel est donné sur la figure 9, le convertisseur étant doté ici d'une matrice 3*3 d'interrupteurs bidirectionnels 91a, 91b, 91c, 91d, 92a, 92b, 92c, 93a, 93b, 93c, par exemple de type transistors IGBT, entre sources 94A, 94B, 94C de tension et sources 96A, 96B, 96C de courant.

Une variante de réalisation de l'architecture électrique décrite précédemment est donnée sur la figure 10.

Pour cette variante, la distribution de puissance électrique à des charges moteur est omise. Une telle architecture est ainsi adaptée par exemple à une turbomachine sans électrification de charges moteur situées au niveau de la turbomachine. Les deux convertisseurs successifs AC/DC et DC/AC réversibles sont ici remplacés par un convertisseur AC/AC 130a, 130b réversible, qui peut être de type matriciel et par exemple comme celui décrit précédemment en lien avec la figure 9. Les états respectifs des interrupteurs bidirectionnels du convertisseur peuvent être commandés par l'unité de commande EEC 110.

Dans cette architecture comme dans les autres, les convertisseurs sont typiquement dotés d'un module de contrôle propre, typiquement doté d'au moins une carte électronique, et qui est susceptible d'échanger des signaux avec l'unité de commande EEC 110 ou un autre calculateur intermédiaire au niveau moteur.

Les fonctionnalités offertes par cette architecture sont semblables à celles de l'architecture de la figure 1, excepté donc, l'alimentation HDVC des charges moteur.

Cette variante d'architecture peut ainsi également permettre d'alimenter le réseau avion 120 AC via une deuxième machine LPG1, LPG2 associée à l'arbre basse pression et/ou via une première machine HPMG1, HPMG2 associée à l'arbre haute pression, selon une proportion contrôlée par l'unité de commande 110 EEC des puissances respectives fournies par ces machines LPG1, HPMG1 (resp. HPMG2, LPG2).

Ici comme dans l'exemple de réalisation décrit précédemment, l'unité de commande 110 peut être pourvue d'au moins deux voies ségréguées pour échanger des signaux avec les convertisseurs. Un tel principe de redondance peut également s'appliquer à l'unité 220 illustré sur la figure 15.

Cette variante d'architecture peut également permettre d'alimenter le réseau propulsif par le biais d'une énergie électrique alternative provenant de sources d'énergie auxiliaires 142 et 144 et en particulier d'effectuer un démarrage de la turbomachine en utilisant cette énergie électrique transmise aux premières machines HPMG1, HPMG2 fonctionnant alors en mode moteur.

Un démarrage moteur peut alors être réalisé par le biais des deux canaux via les machines HPMG1 et HMPG2 simultanément ou bien en variante par l'intermédiaire d'un unique canal via la machine HPMG1 ou HPMG2, notamment en cas de panne de l'autre canal.

Pour cette variante, comme pour l'exemple de réalisation décrit précédemment, il est possible d'avoir la première machine HPMG1 (resp. HPMG2) et son convertisseur AC/AC 130a (resp. 130b) réversible associé dans un même et seul ensemble 150a (resp. 150b) de type « machine intelligente ».

Une autre variante non revendiquée à un seul canal est donnée sur la figure 11 et est pourvue cette fois d'une machine électrique LPG du type des deuxièmes machines de l'un ou l'autre des exemples donnés précédemment et qui est montée sur l'arbre basse pression. Cette machine électrique LPG est associée à une unité de commande 1111, formée d'un ou plusieurs circuits électroniques, qui est ici située dans le corps de l'aéronef. L'architecture est dotée d'une machine HPMG montée sur l'arbre haute pression et qui peut être sous forme d'une machine 3 étages telle que décrite précédemment pour fournir une alimentation AC à la tension contrôlée. Cette machine électrique HPMG est associée à une unité de commande 1112 indépendante, formée d'un ou plusieurs circuits électroniques, qui est ici située dans le corps de l'aéronef.

Ainsi, dans cet exemple de réalisaiton les machines HPMG et LPG peuvent être chacune une machine trois étages permettant en particulier d'effectuer un démarrage moteur à partir d'une source avion.

Les fonctionnalités offertes par cette variante sont, là encore :
- un équilibrage de puissance électrique entre celle fournie par la machine électrique LPG associée à l'arbre basse pression et celle fournie par la machine électrique HPMG associée à l'arbre haute pression,
- une aide au démarrage de la turbomachine à l'aide d'une source externe 142 fournissant une puissance électrique à la machine HPMG qui fonctionne alors en mode moteur,
- une fourniture d'électricité en courant continu à tension élevée pour un ensemble 112 de charges moteur.

Ici, comme dans l'exemple de réalisation illustré sur la figure 1, un ensemble de convertisseurs AC/DC 13a et DC/AC 15a agencés en cascade forment un convertisseur AC/AC disposé entre la machine LPG associée à l'arbre basse pression et la machine HPMG associée à l'arbre haute pression. L'agencement de cette architecture diffère cependant ici notamment en ce que la machine HPMG associée à l'arbre haute pression peut être isolée du module convertisseur AC/AC par le biais d'un élément interrupteur 108 agencé entre la machine HPMG et le convertisseur AC/DC 15a.

Des éléments interrupteurs 102, 108 sont ainsi prévus de part et d'autre du convertisseur AC/AC et permettent, lorsqu'ils sont ouverts, d'isoler le convertisseur du reste de l'architecture. Dans ce cas, lorsque les éléments interrupteurs 102, 105 sont passants, la deuxième machine LPG est susceptible d'alimenter en énergie électrique une portion 122 du réseau avion 120 sans partage de puissance avec la première machine. De même, lorsque l'élément interrupteur 106, est passant, la première machine HPMG est susceptible d'alimenter en énergie électrique une portion 124 du réseau avion 120 sans partage de puissance avec la deuxième machine.

La machine HPMG peut également fournir directement une puissance électrique à une portion 124 du réseau 120, sans convertisseur intermédiaire.

Une autre variante, illustrée sur la figure 12, diffère de la précédente en ce qu'une distribution aux charges moteur est omise. Une telle variante est adaptée notamment à une turbomachine sans électrification de charges domestiques moteur.

La machine HPMG associée à l'arbre HP peut être comme dans l'exemple de réalisation précédent, une machine 3 étages pour fournir une alimentation AC de tension contrôlée. Un convertisseur AC/AC 130, peut-être sous forme de 2 convertisseurs successifs AC/DC et DC/AC dans un exemple non revendiqué ou bien selon l'invention revendiquée d'un seul convertisseur direct, de type matriciel ou cyclo-convertisseur.

Les modes de fonctionnement dans lequel une hybridation par équilibrage de puissance entre la puissance électrique fournie par la machine LPG associée à l'arbre BP et la machine HPMG associée à l'arbre HP est également possible ainsi qu'un mode de fonctionnement dans lequel une source auxiliaire permet un démarrage moteur.

Une autre variante d'architecture est donnée sur la figure 13. Cette variante diffère de la précédente notamment en ce que la source auxiliaire est omise. Un mode de fonctionnement par équilibrage de puissance entre la puissance électrique fournie par la machine LPG associée à l'arbre basse pression et la puissance électrique fournie par la machine HPMG associée à l'arbre haute pression est ici également possible. Le convertisseur AC/AC 130 peut, là encore, être sous forme de 2 convertisseurs successifs AC/DC et DC/AC dans un exemple non revendiqué ou bien selon l'invention revendiquée d'un seul convertisseur direct, de type matriciel ou cyclo-convertisseur. Une telle variante est adaptée notamment à une turbomachine sans électrification des charges domestiques moteur et pour laquelle un démarrage électrique n'est pas nécessaire.

L'une ou l'autre des architectures de génération électrique décrites précédemment peuvent s'adapter à un réseau électrique avion conventionnel en tension alternative et à fréquence variable tout en utilisant un nombre d'équipement réduit et en prévoyant des composants qui remplissent plusieurs fonctions.

Ainsi, avec une architecture telle que décrite plus haut on conserve ainsi la génération AC vers l'avion tout en offrant à la turbomachine la possibilité de tirer profit d'un prélèvement sur les deux arbres HP et BP et permettant, notamment pour les 1, 10-12, 14 de réaliser différents scénarios d'hybridation.

## Revendications

1. Architecture électrique pour un aéronef à propulsion hybride thermique/électrique, ledit aéronef comportant deux turbomoteurs, ladite architecture comprenant pour chaque turbomoteur:
- un réseau électrique avion (120) à courant alternatif AC incluant un réseau de distribution non-propulsif,
- plusieurs premières machines électriques (HPMG1, HPMG2) mécaniquement couplées à un arbre haute pression dudit turbomoteur, lesdites premières machines électriques (HPMG1, HPMG2) étant configurées chacune pour fonctionner en mode moteur afin de fournir de la puissance propulsive mécanique et en mode générateur pour recevoir de la puissance mécanique et fournir de la puissance électrique,
- plusieurs deuxièmes machines électriques (LPG1, LPG2) mécaniquement couplées à un arbre basse pression dudit turbomoteur et configurées chacune en mode générateur pour recevoir de la puissance mécanique et fournir de la puissance électrique,
- un module de conversion d'énergie électrique (130a, 130b) AC/AC réversible agencé entre au moins une première portion de réseau apte à être couplée aux premières machines électriques (HPMG1, HPMG2) et au moins une deuxième portion (LPG1, LPG2, LPG) de réseau apte à être couplée aux deuxièmes machines électriques,
- des éléments interrupteurs (101, 102, 104, 105, 106, 107, 109, 108),
- un système électronique de commande (110, 160, 220) du module de conversion et desdits éléments interrupteurs, le système électronique de commande étant doté d'une unité de commande moteur (110), le système électronique de commande (110, 160, 220) étant configuré pour placer ladite architecture :
- dans au moins un mode de fonctionnement dit « d'hybridation par répartition de puissance » correspondant à une première configuration des éléments interrupteurs dans lequel au moins une deuxième machine (LPG1, LPG2) est couplée au réseau avion (120) et au moins une première machine (HPMG1, HPMG2) est couplée au réseau avion via le module de conversion d'énergie électrique (130a, 130b),
**caractérisée en ce que**
le module de conversion d'énergie électrique AC/AC comprend un convertisseur AC/AC matriciel (130a, 130b) formé d'une matrice d'interrupteurs (91a, 91b, 91c, 92a, 92b, 92c, 93a, 93b, 93c) bidirectionnels ou d'un cyclo-convertisseur.

2. Architecture électrique selon la revendication 1, dans lequel le système électronique de commande (110, 160, 220) est doté d'une unité de commande moteur (110) et dans lequel dans ledit mode de fonctionnement « d'hybridation par répartition de puissance »,-dans lequel des niveaux respectifs d'une première puissance délivrée par ladite au moins une première machine électrique et d'une deuxième puissance délivrée par ladite au moins une deuxième machine électrique sont modulables et contrôlés par l'unité de commande moteur (110).

3. Architecture électrique selon l'une des revendications 1 ou 2, le système électronique de commande (110), étant configuré en outre pour placer ladite architecture : dans au moins un autre mode de fonctionnement « d'assistance de l'arbre haute pression » dans lequel ladite au moins une deuxième machine (LPG1, LPG2) est couplée à ladite au moins une première machine (HPMG1, HPMG2) via le module de conversion d'énergie électrique (130a) AC/AC afin de fournir une énergie électrique à ladite au moins une première machine (HPMG1, HPMG2) fonctionnant en mode moteur.

4. Architecture électrique selon l'une des revendications 1 à 3, comprenant en outre au moins une source d'énergie électrique auxiliaire (142, 144) à courant alternatif, en particulier apte à être implantée dans une partie du corps de l'aéronef, le système électronique de commande (110), étant configuré en outre pour placer ladite architecture : dans au moins un autre mode de fonctionnement dit « de démarrage moteur » dans lequel la source d'énergie électrique auxiliaire (142, 144) est couplée à ladite au moins une première machine électrique (HPMG1, HPMG2) par l'intermédiaire du module de conversion d'énergie électrique (130) AC/AC, ladite au moins une première machine (HPMG1, HPMG2,) fonctionnant en mode moteur.

5. Architecture électrique selon l'une des revendications 1 à 3, dans lequel ladite au moins une deuxième machine électriques (LPG1, LPG2) est formée d'un régulateur (22) et d'un ensemble de trois étages (21, 23, 25) montés en cascade et couplés à un même arbre basse pression de turbomoteur, ledit ensemble étant pourvu :
- d'un premier étage (21) muni d'une génératrice triphasée à aimants permanents pour alimenter un régulateur (22) par le biais d'un courant électrique alternatif en sortie du premier étage,
- d'un deuxième étage (23) muni d'une excitatrice à diodes tournantes pour, à partir d'un courant continu (I_{exc}) obtenu par redressement dudit courant électrique alternatif, fournir un courant de sortie redressé,
- d'un étage principal (25) pourvu d'une machine synchrone triphasée alimentée par ledit courant de sortie redressé, et produire en sortie un courant de fréquence proportionnelle à la vitesse de rotation de l'arbre basse pression.

6. Aéronef à propulsion hybride thermique/électrique comprenant deux turbomoteurs, chaque turbomoteur comprenant au moins un arbre haute pression et un arbre basse pression, et pour chaque turbomoteur, ledit aéronef comprend une architecture électrique selon l'une des revendications précédentes.

## Patentansprüche

1. Elektrische Architektur für ein Luftfahrzeug mit thermischem/elektrischem Hybridantrieb, wobei das Luftfahrzeug zwei Turbomotoren aufweist, wobei die Architektur für jeden Turbomotor umfasst:
- ein Flugzeugstromnetz (120) mit Wechselstrom, das ein nicht angetriebenes Verteilungsnetz einschließt,
- mehrere erste elektrische Maschinen (HPMG1, HPMG2), die mechanisch mit einer Hochdruckwelle des Turbomotors gekoppelt sind, wobei die ersten elektrischen Maschinen (HPMG1, HPMG2) jeweils so konfiguriert sind, dass sie im Motorbetrieb betrieben werden, um mechanische Antriebsleistung zu liefern, und im Generatorbetrieb, um mechanische Leistung zu empfangen und elektrische Leistung zu liefern,
- mehrere zweite elektrische Maschinen (LPG1, LPG2), die mechanisch mit einer Niederdruckwelle des Turbomotors gekoppelt und jeweils im Generatorbetrieb so konfiguriert sind, dass sie mechanische Leistung empfangen und elektrische Leistung liefern,
- ein reversibles AC/AC-Stromwandlungsmodul (130a, 130b), das zwischen mindestens einem ersten Netzabschnitt, der geeignet ist, mit den ersten elektrischen Maschinen (HPMG1, HPMG2) gekoppelt zu werden, und mindestens einem zweiten Netzabschnitt (LPG1, LPG2, LPG), der geeignet ist, mit den zweiten elektrischen Maschinen gekoppelt zu werden, angeordnet ist,
- Schaltelemente (101, 102, 104, 105, 106, 107, 109, 108),
- ein elektronisches Steuersystem (110, 160, 220) des Wandlungsmoduls und der Schaltelemente, wobei das elektronische Steuersystem mit einer Motorsteuereinheit (110) ausgestattet ist, wobei das elektronische Steuersystem (110, 160, 220) so konfiguriert ist, dass sie die Architektur versetzt:
- in mindestens eine Betriebsart, bezeichnet als "Hybridisierung durch Leistungsverteilung", die einer ersten Konfiguration der Schaltelemente entspricht, wobei mindestens eine zweite Maschine (LPG1, LPG2) mit dem Flugzeugnetz (120) gekoppelt ist und mindestens eine erste Maschine (HPMG1, HPMG2) über das elektrische Stromwandlungsmodul (130a, 130b) mit dem Flugzeugnetz gekoppelt ist,
**dadurch gekennzeichnet, dass**
das AC/AC-Stromwandlungsmodul einen Matrix-AC/AC-Wandler (130a, 130b) umfasst, der aus einer Matrix bidirektionaler Schalter (91a, 91b, 91c, 92a, 92b, 92c, 93a, 93b, 93c) oder einem Direktumrichter gebildet ist.

2. Elektrische Architektur nach Anspruch 1, wobei das elektronische Steuersystem (110, 160, 220) mit einer Motorsteuereinheit (110) ausgestattet ist und wobei in der Betriebsart "Hybridisierung durch Leistungsverteilung", in welcher die jeweiligen Stufen einer von der mindestens einen elektrischen Maschine gelieferten ersten Leistung und einer von der mindestens einen zweiten elektrischen Maschine gelieferten zweiten Leistung durch die Motorsteuereinheit (110) modulierbar und steuerbar sind.

3. Elektrische Architektur nach einem der Ansprüche 1 oder 2, wobei das elektronische Steuersystem (110) ferner so konfiguriert ist, dass es die Architektur versetzt: in mindestens eine andere Betriebsart "Unterstützung der Hochdruckwelle", in welcher die mindestens eine zweite Maschine (LPG1, LPG2) über das AC/AC-Stromwandlungsmodul (130a) mit der mindestens einen ersten Maschine (HPMG1, HPMG2) gekoppelt ist, um der mindestens einen im Motorbetrieb arbeitenden ersten Maschine (HPMG1, HPMG2) elektrische Energie zu liefern.

4. Elektrische Architektur nach einem der Ansprüche 1 bis 3, die ferner mindestens eine elektrischer Wechselstrom-Hilfsenergiequelle (142, 144) umfasst, die insbesondere geeignet ist, in einen Teil des Körpers des Luftfahrzeugs eingebaut zu werden, wobei das elektronische Steuersystem (110) ferner so konfiguriert ist, dass es die Architektur versetzt: in mindestens eine andere Betriebsart, bezeichnet als "Motorstart", in welcher die elektrische Hilfsenergiequelle (142, 144) über das AC/AC-Stromwandlungsmodul (130) mit der mindestens einen ersten elektrischen Maschine (HPMG1, HPMG2) gekoppelt ist, wobei die mindestens eine erste Maschine (HPMG1, HPMG2) im Motorbetrieb arbeitet.

5. Elektrische Architektur nach einem der Ansprüche 1 bis 3, wobei die mindestens eine zweite elektrische Maschine (LPG1, LPG2) aus einem Regler (22) und einer Gruppe aus drei Stufen (21, 23, 25) gebildet ist, die kaskadiert eingebaut und mit derselben Niederdruckwelle eines Turbomotors gekoppelt sind, wobei die Gruppe versehen ist mit:
- einer ersten Stufe (21), die mit einem Drehstromgenerator mit Permanentmagneten ausgestattet ist, um einen Regler (22) mit Hilfe von Wechselstrom am Ausgang der ersten Stufe zu versorgen,
- einer zweiten Stufe (23), die mit einem Erreger mit Drehdioden ausgestattet ist, um aus einem Gleichstrom (I_{exc}), der durch Gleichrichtung des Wechselstroms erhalten wird, einen gleichgerichteten Ausgangsstrom zu liefern,
- einer Hauptstufe (25), die mit einer Drehstrom-Synchronmaschine versehen ist, die mit dem gleichgerichteten Ausgangsstrom versorgt wird, und am Ausgang einen Strom mit einer Frequenz erzeugt, die proportional zur Drehzahl der Niederdruckwelle ist.

6. Luftfahrzeug mit thermischem/elektrischem Hybridantrieb, das zwei Turbomotoren umfasst, wobei jeder Turbomotor mindestens eine Hochdruckwelle und eine Niederdruckwelle umfasst, und wobei das Luftfahrzeug für jeden Turbomotor eine elektrische Architektur nach einem der vorhergehenden Ansprüche umfasst.

## Claims

1. An electrical architecture for an aircraft with thermal/electrical hybrid propulsion, said aircraft including two turbine engines, said architecture comprising, for each turbine engine:
- an airplane AC electrical network (120) including a non-propulsion distribution network,
- several first electrical machines (HPMG1, HPMG2) mechanically coupled to a high-pressure shaft of said turbine engine, said first electrical machines (HPMG1, HPMG2) being configured to operate in motor mode in order to supply mechanical propulsion power and in generator mode to receive mechanical power and supply electrical power,
- several second electrical machines (LPG1, LPG2) mechanically coupled to a low-pressure shaft of said turbine engine and configured in generator mode to receive mechanical power and supply electrical power,
- a reversible AC/AC electrical energy conversion module (130a, 130b) arranged between at least one first network portion able to be coupled to the first electrical machine (HPMG1, HPMG2) and to at least one second network portion (LPG1, LPG2, LPG) able to be coupled to the second electrical machines,
- switch elements (101, 102, 104, 105, 106, 107, 109, 108),
- an electronic system (110, 160, 220) controlling the conversion module and said switch elements, the electronic control system being provided with a motor control unit (110), the electronic control system (110, 160, 220) being configured to put said architecture:
- in at least one so-called "power distribution hybridization" operating mode corresponding to a first configuration of the switch elements wherein said at least one second machine (LPG1, LPG2) is coupled to the airplane network (120) and at least one first machine (HPMG1, HPMG2) is coupled to the airplane network via the electrical energy conversion module,
**characterized in that** the AC/AC electrical energy conversion module (130) comprises a matrix AC/AC converter (13a, 13a) formed by a matrix of bidirectional switches (91a, 91b, 91c, 92a, 92b, 92c, 93a, 93b, 93c) or a cycloconverter.

2. Electrical architecture according to claim 1, wherein the electronic control system (110, 160, 220) is provided with a motor control unit (110) and wherein, in said "power distribution hybridization" operating mode, wherein the respective levels of a first power delivered by said at least one first electrical machine and of a second power delivered by said at least one second electrical machine are adjustable and controlled by the motor control unit (110).

3. Electrical architecture according to one of claims 1 or 2, the electronic control system (110) furthermore being configured to put said architecture in at least one other "assistance of the high-pressure shaft" operating mode wherein said at least one second machine (LPG1, LPG2, LPG) is coupled to said at least one first machine (HPMG1, HPMG2) via the AC/AC electrical energy conversion module (130a) in order to supply an electrical energy to said at least one first machine (HPMG1, HPMG2) operating in motor mode.

4. Electrical architecture according to one of claims 1 to 3, furthermore comprising at least one auxiliary AC electrical energy source (142, 144), in particular able to be installed in a part of the body of the aircraft, the electronic control system (110) furthermore being configured to put said architecture in at least one other so-called "motor start" operating mode, wherein the auxiliary electrical energy source (142, 144) is coupled to said at least one first electrical machine (HPMG1, HPMG2) by means of the AC/AC electrical energy conversion means (130), said at least one first machine (HPMG1, HPMG2) operating in motor mode.

5. Electrical architecture according to one of claims 1 to 3, wherein said at least one second electrical machine (LPG1, LPG2) is formed by a regulator (22) and a set of three stages (21, 23, 25) mounted in cascade and coupled to the same turbine-engine low-pressure shaft, said set being provided with:
- a first stage (21) provided with a three-phase generator with permanent magnets for supplying a regulator (22) by means of an alternating electric current at the output of the first stage,
- a second stage (23) provided with a rotating-diode exciter in order, from a DC current (I_{exc}) obtained by rectifying said alternating electric current, to supply a rectified output current,
- a main stage (25) provided with a three-phase synchronous machine supplied by said rectified output current, and to produce as an output a current with a frequency proportional to the rotation speed of the low-pressure shaft.

6. Aircraft with thermal/electrical hybrid propulsion comprising two turbine engines, each turbine engine comprising at least one high-pressure shaft and one low-pressure shaft and, for each turbine engine, said aircraft comprises an electrical architecture according to one of the preceding claims.
